# EUROPEAN PATENT APPLICATION

(11) **EP 3 703 192 A1**
(43) Date of publication of application: **02.09.2020**
(21) Application number: 19159410.0
(22) Date of filing: 26.02.2019
(51) Int. Cl.: H01R 13/53, H01F 27/04, H02G 15/064

(54) **TERMINAL ADAPTER FOR AN ELECTRICAL BUSHING, ELECTRICAL BUSHING HAVING SAID TERMINAL ADAPTER, AND METHOD FOR MOUNTING THEREOF**

(71) Applicant: ABB Power Grids Switzerland AG, 5400 Baden (CH)
(72) Inventor: Czyzewski, Jan, 30-376 Krakow (PL); Maurer, Victoria, 4500 Solothurn (CH); Graas, Fredrik, 5400 Baden (CH); Sjoberg, Peter, 771 43 Ludvika (SE); Kutorasinski, Kamil, 5400 Baden (CH); Gloor, Marco, 5400 Baden (CH)
(74) Representative: Epping - Hermann - Fischer

(57) **Abstract**

An aspect of the present disclosure provides a terminal adapter for an electrical bushing having an inner tube and an inner terminal. The terminal adapter comprises a first radial surface configured for applying a radial clamping load to a second radial surface of the inner tube, a first axial surface configured for axially supporting the inner terminal, and an outer terminal fastener configured for applying an axial load between an outer terminal and the inner terminal, wherein the terminal adapter provides a load path from the first axial surface to the outer terminal fastener. Further aspects provide an electrical bushing having a terminal adapter according to the above aspect, wherein the electrical bushing is a medium- or high-voltage electrical bushing, and a medium- or high-voltage device having said electrical bushing, particularly a medium- or high-voltage transformer. A yet further aspect of the present disclosure further provides a method for mounting a terminal adapter according to the above aspect to an electrical bushing.

## Description

### Field of the disclosure

Embodiments of the present disclosure generally relate to a terminal adapter for an electrical bushing, particularly for a medium- or high-voltage electrical bushing. In particular, embodiments of the present disclosure relate to a terminal adapter for an electrical bushing configured for axially supporting an inner terminal with an axial load applied thereto by an outer terminal. More particularly, embodiments of the present disclosure relate to a method for mounting said terminal adapter to an electrical bushing.

### Technical background:

High-voltage transformers typically include a number of electrical bushings provided therein to facilitate electrical insulation of conductors passing through a barrier, such as a grounded transformer housing.

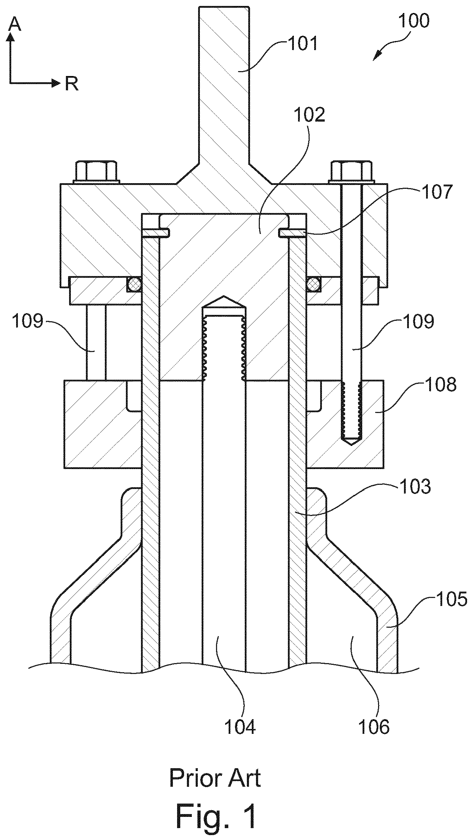

Electrical bushings for medium- or high-voltage applications typically comprise a hollow inner tube through which a conductor is provided. A cross-sectional view of an electrical bushing 100 known in the current state of the art is exemplarily shown in Fig. 1. Electrical bushing 100 comprises an inner tube 103, an outer insulator 105, and an insulation core 106 provided in the area therebetween. A conductor 104 is provided within inner tube 103, the conductor 104 being connected to an inner terminal 102. Inner tube 103 and conductor 104 extend in the axial direction A, corresponding to a longitudinal direction of the electrical bushing 100.

The electrical bushing 100 is exemplarily shown as having a bolted outer terminal 101 which is attached to the electrical bushing 100 at its axial end using terminal fasteners 109. Outer terminal 101 makes axial contact with inner terminal 102, which is restrained in the axial direction A to the end surface of inner tube 103 by locking ring 107. Holding ring 108 is clamped to the outer radial surface of inner tube 103 and comprises threaded holes to which terminal fasteners 109 are fastened. Thereby, terminal fasteners 109 allow for outer terminal 101 to be clamped to inner terminal 102 with a contact loading in the axial direction A, such that the electrical resistance between outer terminal 101 and inner terminal 102 is reduced.

Due to the arrangement whereby outer terminal 101 is clamped to inner terminal 102, an axial load is applied to the inner tube 103 via locking ring 107 in the axial direction A. A high clamping load is required in order to maintain a low-resistance connection between the outer terminal 101 and the inner terminal 102, and the axial load is required to be withstood by the inner tube 103. Furthermore, holding ring 108 may require a high clamping load to inner tube 103 in order to axially restrain the high clamping load through friction between the holding ring 108 and the inner tube 103. Thus, the inner tube 103 is required to comprise a large wall thickness to withstand such loads, which increases the weight of the electrical bushing 100.

It is desirable that the weight of the electrical bushing 100 is minimized as the cost of the electrical bushing, as well as effort in installing and maintaining the electrical bushing, is reduced. Using a thin-wall inner tube allows for the weight to be reduced, however a thin-wall inner tube is not capable of withstanding the axial load induced by the clamping of the outer terminal 101 to the inner terminal 102. Clamping load may be reduced such that the axial load on a thin-wall inner tube is reduced, however this would compromise the electrical performance of the electrical bushing, as the low-resistance connection between the outer terminal 101 and the inner terminal 102 is compromised. In view thereof, it is desired to overcome at least some of the problems in the prior art.

### Summary of the disclosure

An aspect of the present disclosure provides a (= at least one) terminal adapter for an electrical bushing having an inner tube and an inner terminal. The terminal adapter comprises a first radial surface configured for applying a radial clamping load to a second radial surface of the inner tube, a first axial surface configured for axially supporting the inner terminal, and an outer terminal fastener configured for applying an axial load between an outer terminal and the inner terminal, wherein the terminal adapter provides a load path from the first axial surface to the outer terminal fastener.

A further aspect of the present disclosure further provides an electrical bushing having a terminal adapter according to the above aspect, wherein the electrical bushing is a medium- or high-voltage electrical bushing.

A further aspect of the present disclosure further provides a medium- or high-voltage device having an electrical bushing according to the above aspect. In particular, the medium- or high-voltage device is an electrical transformer.

A yet further aspect of the present disclosure further provides a method for mounting a terminal adapter according to the above aspect to an electrical bushing. The method comprises clamping the terminal adapter to the inner tube of the electrical bushing, assembling the inner terminal to the terminal adapter, assembling the outer terminal to the terminal adapter, and fastening the outer terminal to the terminal adapter using the outer terminal fastener such that the outer terminal applies an axial load to the inner terminal.

The embodiments described in the present disclosure allow for the axial loading applied to the inner tube to be reduced, therefore allowing for a thin-wall inner tube to be used in an electrical bushing. The use of a thin-wall inner tube allows for reduced weight of the bushing, as well as decreased manufacturing and installation costs. Further, the terminal adapter allows for more reliable attachment of the outer terminal, allowing for the electrical bushing to exhibit high mechanical and electrical performance.

Further advantages, features, aspects and details that can be combined with embodiments described herein are evident from the dependent claims, claim combinations, the description and the drawings.

### Brief description of the Figures:

The details will be described in the following with reference to the figures, wherein
- Fig. 1: is a schematic cross-sectional view of an electrical bushing known in the current state of the art;
- Fig. 2: is a schematic cross-sectional view of an electrical bushing and terminal adapter according to embodiments of the present disclosure;
- Fig. 3: is a schematic cross-sectional view A-A of an electrical bushing and terminal adapter according to embodiments of the present invention;
- Fig. 4: is a schematic cross-sectional view of an electrical bushing and terminal adapter according to embodiments of the present disclosure;
- Fig. 5: is a schematic cross-sectional view B-B of an electrical bushing and terminal adapter according to embodiments of the present disclosure;
- Fig. 6: is a schematic cross-sectional view C-C of an electrical bushing and terminal adapter according to embodiments of the present disclosure; and
- Fig. 7: is a flowchart of the method for mounting a terminal adapter to an electrical bushing according to embodiments of the present disclosure.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

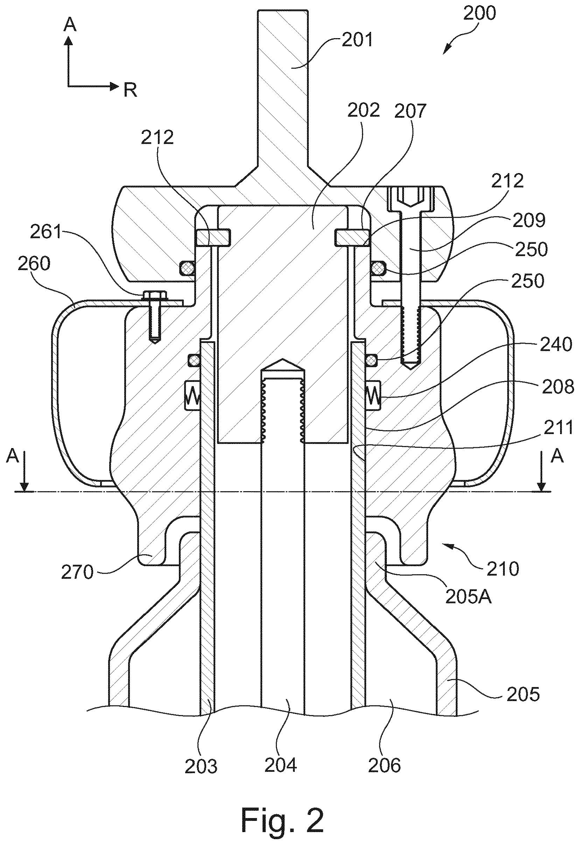

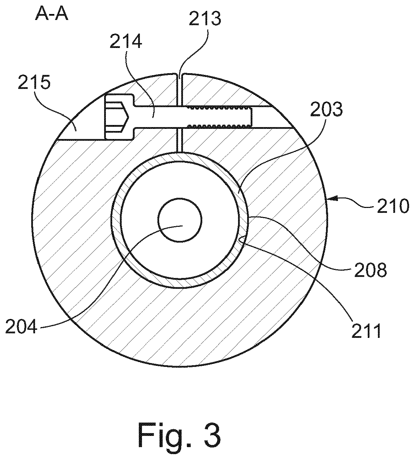

Reference will now be made to Figs. 2, which shows a schematic cross-sectional view of a terminal adapter 210 for an electrical bushing 200 through a plane extending in a longitudinal direction of the electrical bushing 200. Further reference will be made to Fig. 3, which shows a schematic cross-sectional view of a terminal adapter 210 for an electrical bushing 200 through line A-A as indicated on Fig. 2.

According to an embodiment of the present disclosure, a terminal adapter 210 for an electrical bushing 200 is provided. The electrical bushing 200 comprises an inner tube 203 and an inner terminal 202. Terminal adapter 210 comprises a first radial surface 211 configured for applying a radial clamping load to a second radial surface 208 of the inner tube 203, a first axial surface 212 configured for axially supporting the inner terminal 202, and an outer terminal fastener 209 configured for applying an axial load between an outer terminal 201 and the inner terminal 202, wherein the terminal adapter 210 provides a load path from the first axial surface 212 to the outer terminal fastener 209.

Terminal adapter 210 includes first radial surface 211. First radial surface 211 may be an inner radial surface of terminal adapter 210 having a normal direction substantially in the radial direction R and facing inwards. Particularly, first radial surface 211 may have a normal direction in the radial direction R. First radial surface 211 may be rotationally symmetrical about a longitudinal axis of electrical bushing 200.

Inner tube 203 includes second radial surface 208. Second radial surface 208 may be an outer radial surface of inner tube 203 having a normal direction substantially in the radial direction R and facing outwards. Particularly, second radial surface 208 may have a normal direction in the radial direction R. Second radial surface 208 may be rotationally symmetrical about a longitudinal axis of electrical bushing 200.

First radial surface 211 is configured for applying a radial clamping load to second radial surface 208. For example, first radial surface 211 and second radial surface 208 may each have a substantially concentric cylindrical shape, however the present disclosure is not limited thereto. For example, first radial surface 211 and second radial surface 208 may each have a shape having an oval cross-section, or a rounded rectangular cross-section. First radial surface 211 and second radial surface 208 may have substantially the same shape such that first radial surface 211 can apply an evenly distributed radial clamping load across the entire circumference of second radial surface 208. First radial surface 211 may be shaped such that first radial surface 211 has a clearance fit with second radial surface 208. Thus, terminal adapter 210 may be assembled to inner tube 203 by sliding onto inner tube 208.

Terminal adapter 210 may include a clamping means configured for fastening terminal adapter 210 to inner tube 203. Particularly referring to Fig. 3, which shows a cross-sectional view through line A-A as indicated on Fig. 2, clamping means 214 is provided. Clamping means 214 may include, for example, at least one threaded fastener. However, the present disclosure is not limited thereto, and the clamping means 214 may alternatively include any clamping means for applying a load between first radial surface 211 and second radial surface 208. Through friction generated between first radial surface 211 and second radial surface 208, terminal adapter 210 is fastened to inner tube 203. Terminal adapter 210 may further include a compression slot 213. Clamping means 214 may be configured to tighten and close compression slot 213 such that inner radial surface 211 is constricted and clamped onto second radial surface 208. Clamping means 214 may be countersunk into the outer surface of terminal adapter 210 such that the electrical field generated on the surface of terminal adapter 210 and/or clamping means 214 is reduced.

Terminal adapter 210 further includes first axial surface 212. As exemplarily shown in Fig. 2, first axial surface 212 may be oriented so that first axial surface 212 has a normal direction substantially in the axial direction A. However, first axial surface 212 may have a normal direction at an angle to axial direction A, for example at an angle between 0 degrees and 45 degrees to axial direction A. Having a normal direction at an angle to axial direction A may provide a greater surface area for greater electrical contact between first axial surface 212 and the corresponding surface of inner terminal 202, or may have a centering effect on inner terminal 202. First axial surface 212 is configured for axially supporting an inner terminal 202 of electrical bushing 200. As such, first axial surface 212 makes mechanical contact with inner terminal 202 as well as electrical contact with inner terminal 202.

Electrical bushing 200 includes an inner terminal 202. Inner terminal 202 is configured for electrically connecting outer terminal 201 with conductor 204. Outer terminal 201 makes contact with and applies a load to a contact face on an axial end of inner terminal 202. The electrical performance of the electrical bushing 200, particularly the electrical resistance between outer terminal 201 and inner terminal 202, is dependent upon the applied load forcing the outer terminal 201 and the inner terminal 202 together. Inner terminal 202 may include an attachment means for attaching to conductor 204 at an axial end opposite to the contact face. For example, inner terminal 202 may include a hole configured for receiving a corresponding end of conductor 204. The end of the conductor 204 may for example be brazed to the inner terminal 202, or the conductor 204 may be provided as a one piece with the inner terminal 202.

Inner terminal 202 is supported in the axial direction A by the first axial surface 212 of terminal adapter 210. A corresponding axial surface of inner terminal 202 is provided for contacting first axial surface 212. The corresponding axial surface may be a surface of inner terminal 202 itself, for example, in the form of a circumferential flange at the axial end of inner terminal 202. Alternatively, as exemplarily shown in Fig. 2, inner terminal 202 may include a locking ring 207. Locking ring 207 may be constructed from two locking ring halves. Locking ring 207 may engage with a corresponding circumferential groove in inner terminal 202 such that inner terminal 202 is axially supported by first axial surface 212 via locking ring 207. The axial clamping load applied to inner terminal 202 by outer terminal 201 is thus transferred to terminal adapter 210 via first axial face 212. Further, the contact between inner terminal 202 and first axial face 212, particularly between inner terminal 202, locking ring 207 and first axial face 212, provides an electrical contact between inner terminal 202 and terminal adapter 210 such that terminal adapter 210 is at the same electrical potential as outer terminal 201 and inner terminal 202.

Electrical bushing 200 is further provided with an outer terminal 201. Outer terminal 201 is configured for connecting an external conductor (not shown) to electrical bushing 200 such that electricity can be transmitted therethrough. For example, outer terminal 201 may include an attachment means for attaching an external conductor. In order to reduce electrical resistance between outer terminal 201 and inner terminal 202, a clamping load is applied by outer terminal 201 to inner terminal 202. Terminal adapter 210 is therefore provided with an outer terminal fastener 209 which is configured to apply an axial load between the outer terminal 201 and the inner terminal 202.

Outer terminal fastener 209 may include any fastening means suitable for applying an axial load between the outer terminal 201 and inner terminal 202. For example, outer terminal fastener 209 may be a threaded portion of outer terminal 201, particularly an inner threaded portion, which is configured to engage with a corresponding threaded portion of terminal adapter 210. Outer terminal 201 may be assembled to terminal adapter 210 by rotating and threading outer terminal 201 thereon, such that continued rotation will apply a greater load to inner terminal 202. However, a tangential load applied to outer terminal 201, for example an inadvertently pulled conductor attached thereto, may cause outer terminal 201 to rotate, potentially reducing the applied load between outer terminal 201 and inner terminal 202.

As an alternative to a threaded outer terminal 201, outer terminal fastener 209 may include at least one threaded fastener as exemplarily shown in Fig. 2. The at least one threaded fastener of outer terminal fastener 209 may engage with a corresponding threaded hole in terminal adapter 210. Continued tightening of the at least one threaded fastener clamps outer terminal 201 onto inner terminal 202 such that a load is applied therebetween. Such an outer terminal fastener 209 has the added benefit of restricting the rotation of outer terminal 201, so that a tangential load may be resisted without affecting the applied load between outer terminal 201 and inner terminal 202. Further, the load applied by outer terminal 201 may be evenly distributed with a plurality of threaded fasteners, such that even contact between outer terminal 201 and inner terminal 202 may be maintained.

Terminal adapter 210 provides a load path from the first axial surface 212 to the outer terminal fastener 209. In the context of the present disclosure, the term "load path" refers to a means to transfer a mechanical load from one member to another member. The terminal adapter 210 of the present disclosure provides a load path from the first axial surface 212 to the outer terminal fastener 209 such that the terminal adapter 210 provides a means for the outer terminal 201 may apply an axial load to the inner terminal 202. Due to the load path from the first axial surface 212 to the outer terminal fastener 209 provided by terminal adapter 210, the axial load applied to the inner terminal is withstood by the terminal adapter 210.

It follows that the inner tube 203 is therefore not required to withstand the axial load applied to the inner terminal, thus allowing for a thin-wall inner tube 203 to be used in electrical bushing 200. A thin-walled inner tube 203 uses less material and has less mass compared to a thick-wall inner tube 103 of the conventional electrical bushing 100 as shown in Fig. 1. The thin-walled inner tube 203 can also accommodate a conductor 104 of larger diameter, thus providing a larger current rating of the bushing. Therefore, an electrical bushing 200 having a terminal adapter 210 according to embodiments of the present disclosure achieves lower manufacturing and installation costs due to the lower weight and less material of a thin-wall inner tube 203. Further, due to the axial load being withstood by the terminal adapter 210, the use of a thin-wall inner tube 203 would not restrict the clamping load which could be applied between outer terminal 201 and inner terminal 202, thus maintaining low electrical resistance between the respective terminals. Thus, the electrical performance of an electrical bushing 200 having a thin-wall inner tube 203 would not be compromised.

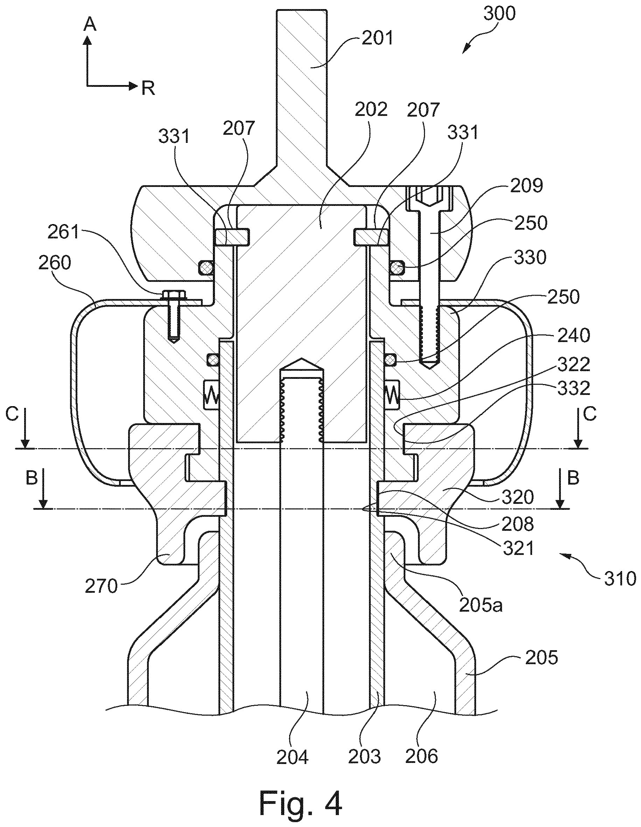

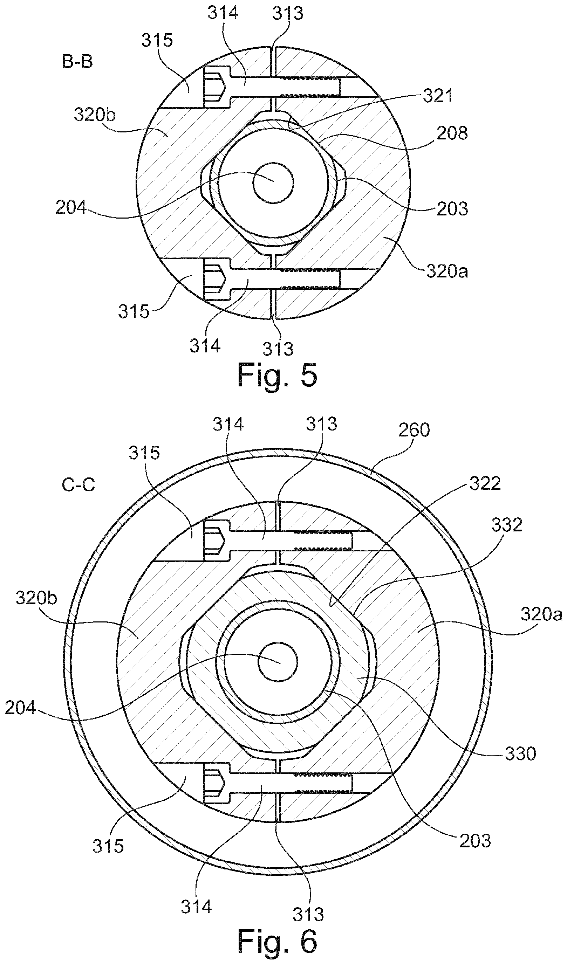

Reference will now be made to Fig. 4, which shows a schematic cross-sectional view of a terminal adapter 310 for an electrical bushing 300 through a plane extending in a longitudinal direction of the electrical bushing 300. Further reference will be made to Figs. 5 and 6, which show schematic cross-sectional views of a terminal adapter 310 for an electrical bushing 300 through lines B-B and C-C, respectively, as indicated on Fig. 4.

According to a second embodiment of the present disclosure, a terminal adapter 310 for an electrical bushing 300 is provided. Terminal adapter 310 includes a lower component 320 having the first radial surface 321 and an upper component 330 having the first axial surface 331 and the outer terminal fastener 209, wherein the lower component 320 is configured for securing the upper component 330 to the inner tube 203.

Terminal adapter 310 according to the second embodiment may represent a multi-piece terminal adapter 310 having a lower component 320 and an upper component 330. The lower component 320 is a clamping component which clamps upper component 330 to the inner tube 203. The lower component 320 may include a two-piece clamp. Further, terminal adapter 310 may include a "double-square" clamping arrangement, wherein the interfaces between upper component 330 and lower component 320, and between lower component 320 and inner tube 203, respectively include locking elements to prevent rotation of the terminal adapter 310. The locking elements may be flat surfaces formed on upper component 330, lower component 320 and inner tube 203. Although the present disclosure may at one point refer to a "double-square" clamping arrangement, the number of locking elements is not limited to four locking elements. Rather, any number of locking elements may be used in the respective interfaces.

As exemplarily shown in Fig. 4, lower component 320 includes a member which is configured for fastening inner tube 203 to upper component 330. Lower component 320 includes first radial surface 321 which is configured for applying a radial clamping load to the second radial surface 208 of the inner tube 203. Second radial surface 208 of inner tube 203 may include at least one feature formed into the outer surface of inner tube 203. For example, second radial surface 208 may include a circumferential groove or at least one machined flat portion. Lower component 330 may further include a screening lip 270 as detailed above in the first embodiment for electrically and physically protecting upper edge 205a of outer insulator 205.

Fig. 5 further shows the interface between lower component 320 and inner tube 203. As exemplarily shown, inner tube 203 is provided with second radial surface 208 having at least one locking element. The at least one locking element may be in the form of at least one flat surface. First radial surface 321 may have a respective corresponding locking element. The example shown has four such locking elements, particularly flat surfaces, on each of first radial surface 321 and second radial surface 208. Thus, the present example is referred to as the first "square" of the "double-square" clamping arrangement. However, as mentioned previously, the present disclosure is not limited thereto, and first radial surface 321 and second radial surface 208 may have any number of locking elements. The at least one locking element of the first radial surface 321 and the second radial surface 208 is configured for preventing relative rotation between inner tube 203 and lower component 320. Thus, the terminal adapter 310 provides resistance against, for example, a tangential load applied to outer terminal 201, thereby improving mechanical performance of electrical bushing 300.

As exemplarily shown in Fig. 4, upper component 330 includes a member which is configured for supporting outer terminal 201 and inner terminal 202. Upper component 330 includes first axial surface 331 configured for axially supporting inner terminal 202, as well as outer terminal fastener 209 configured for applying an axial load between outer terminal 201 and inner terminal 202. Upper component 330 provides a load path from first axial surface 331 to outer terminal fastener 209 in the same manner as described above for the first embodiment. Optionally, upper component 330 may further include at least one of electrical contactor 240 and sealing means 250. Further optionally, upper component 330 may include a corona shield 260 detachably assembled thereto.

According to an embodiment, which may be combined with other embodiments described herein, the lower component 320 includes a third radial surface 322 and the upper component includes a fourth radial surface 332, wherein the third radial surface 322 is configured for applying a radial clamping load to the fourth radial surface 332.

Fig. 6 further shows the interface between lower component 320 and upper component 330. As exemplarily shown, upper component 330 is provided with fourth radial surface 332 having at least one locking element. The at least one locking element may be in the form of at least one flat surface. Third radial surface 322 may have a respective corresponding locking element. The example shown has four such locking elements, particularly flat surfaces, on each of third radial surface 322 and fourth radial surface 332. Thus, the present example is referred to as the second "square" of the "double-square" clamping arrangement. However, as mentioned previously, the present disclosure is not limited thereto, and third radial surface 322 and fourth radial surface 332 may have any number of locking elements. The at least one locking element of the third radial surface 322 and the fourth radial surface 332 is configured for preventing relative rotation between upper component 330 and lower component 320. Thus, the terminal adapter 310 provides resistance against, for example, a tangential load applied to outer terminal 201, thereby improving mechanical performance of electrical bushing 300.

According to an embodiment, which may be combined with other embodiments described herein, lower component 320 may include a two-piece clamp. As exemplarily shown in Figs. 5 and 6, lower component 320 may include a first clamp half 320a and a second clamp half 320b. Configuring lower component 320 as a two-piece clamp allows for improved ease of installation. Further, a two-piece clamp allows for inner tube 203 and/or upper component 330 to include grooves, flats or other features which may provide further advantages. For example, inner tube 203 may include a circumferential groove or a number of machined flats having an axial surface to which lower component 320 may interact, thereby allowing for an axial tensile load applied to outer terminal 201 to be resisted.

Lower component 320 may include a clamping means 314 configured for clamping lower component 320 to inner tube 203 and upper component 330. Clamping means 314 may include, for example, at least one threaded fastener. However, the present disclosure is not limited thereto, and the clamping means 314 may alternatively include any clamping means for applying a load between first radial surface 321 and second radial surface 208, as well as between third radial surface 322 and fourth radial surface 332. First clamp half 320a and second clamp half 320b may be formed such that when the two clamp halves 320a, 320b are assembled, a compression slot 313 is provided therebetween. Clamping means 314 may be configured to tighten and close compression slot 313 such that first radial surface 321 and the third radial surface 322 are constricted and clamped onto second radial surface 208 and fourth radial surface 332, respectively. Clamping means 314 may be countersunk into the outer surface of lower component 320 such that the electrical field generated on the surface of terminal adapter 310 and/or clamping means 314 is reduced.

According to an embodiment, which may be combined with any embodiment described herein, terminal adapter 210, 310 may further include an electrical contactor 240 between the terminal adapter 210, 310 and the inner tube 203. As exemplarily shown in Figs. 2 and 4, electrical contactor 240 may be provided in a circumferential groove an inner radial surface of terminal adapter 210, 310. Electrical contactor 240 may include a circumferential ring of electrically conductive material, allowing for a reliable electrical connection to be maintained between terminal adapter 210, 310 and inner tube 203 so that terminal adapter 210, 310 and inner tube 203 may be maintained at substantially the same electrical potential. Electrical contactor 240 may include an elastic element. For example, electrical contactor 240 may include an electrically-conductive spring element configured for maintaining a contact force between the electrical contactor 240 and the corresponding surfaces of terminal adapter 210, 310 and inner tube 203.

According to an embodiment, which may be combined with other embodiments described herein, terminal adapter 210, 310 may further include a corona shield 260 for electrically shielding the terminal adapter 210, 310. Corona shield 260 as exemplarily shown in Fig. 2 and 4 includes a shield which substantially surrounds terminal adapter 210, 310. However, the present disclosure is not limited thereto, and corona shield 260 may partially surround terminal adapter 210, 310, or may completely surround terminal adapter 210, 310. Further, corona shield 260 may further surround or partially surround outer terminal 201. Corona shield 260 includes an electrically conductive material, and may have a radiused form such that the electrical field generated at a surface of corona shield 260 is reduced. Corona shield 260 may be electrically connected to terminal adapter 210, 310 such that corona shield 260 and terminal adapter 210, 310 are maintained at substantially the same electrical potential.

According to an embodiment, which may be combined with other embodiments described herein, corona shield 260 may be detachable. As exemplarily shown in Figs. 2 and 4, corona shield 260 may include at least one fastener 261 configured for detachably fastening corona shield 260 to terminal adapter 210, 310. For example, the at least one fastener 261 may include a number of threaded screws or bolts. However, the present disclosure is not limited thereto, and any form of detachable fastening means may be used to detachably fasten corona shield 260 to terminal adapter 210, 310. For example, terminal adapter 210, 310 may include a bayonet fastener for detachably fastening corona shield 260 to terminal adapter 210, 310. A detachable corona shield 260 allows for the corona shield 260 to be removed from terminal adapter 210, 310 in order to improve accessibility to terminal adapter 210, 310 for installation and/or maintenance. Further, a detachable corona shield 260 allows for the corona shield 260 to be optional in certain applications, for example, at a lower voltage level where the electrical fields generated at the surface are sufficiently low that corona shield 260 is not required.

As exemplarily shown in Figs. 2 and 4, the electrical bushing 200, 300 of the present disclosure includes an outer insulator 205. Outer insulator 205 may include a silicon rubber (SiR) insulator, and may be molded directly to inner tube 203 such that upper edge 205a is formed at the area where outer insulator 205 interfaces with inner tube 203. However, directly molding outer insulator 205 to inner tube 203 may lead to a problem where upper edge 205a may be exposed. An exposed upper edge 205a may be vulnerable to damage to the outer insulator 205 caused during installation or transportation of the electrical bushing 200, 300. Further, an exposed upper edge 205a may have a high electrical field generated at its surface during operation of the electrical bushing 200, 300.

According to an embodiment, which may be combined with any embodiment described herein, terminal adapter 210, 310 may further include a screening lip 270. Screening lip 270 surrounds upper edge 205a of outer insulator 205. Particularly, screening lip 270 circumferentially surrounds upper edge 205a of outer insulator 205. Screening lip 270 may include a radiused edge such that the electrical field generated at the surface of screening lip 270 is reduced. Due to being a part of terminal adapter 210, 310, screening lip 270 may be at substantially the same electrical potential as inner tube 203, such that screening lip 270 electrically shields upper edge 205a of outer insulator 205, thereby preventing damage caused by excessive electrical field. Further, due to screening lip 270 surrounding upper edge 205a, outer insulator 205 is physically protected from damage.

According to an embodiment, which may be combined with any embodiment described herein, terminal adapter 210, 310 may further include a sealing means 250 provided between the terminal adapter 210, 310 and at least one of the inner tube 203 and the outer terminal 201. Sealing means 250 is provided to prevent ingress and/or egress of liquids or gases. As exemplarily shown in Figs. 2 and 4, sealing means 250 includes an O-ring arranged within a circumferential groove. However the present disclosure is not limited thereto, and sealing means 250 may include any suitable sealing means known to the person skilled in the art. As further exemplarily shown, outer terminal 201 may include sealing means 250 provided between outer terminal 201 and terminal adapter 210, 310. However, the present disclosure is not limited thereto, and the sealing means 250 provided between outer terminal 201 and terminal adapter 210, 310 may be included in either the outer terminal 201 or the terminal adapter 210, 310.

According to an aspect of the present disclosure, an electrical bushing 200, 300 having a terminal adapter according to any of the embodiments described herein is provided.

The electrical bushing 200, 300 may comprise a mounting flange. The mounting flange may be configured to support the electrical bushing 200, 300 when installed in an electrical device. The mounting flange may be mounted to a mounting surface. The mounting surface may be a housing for an electrical device, particularly a housing for an electrical transformer, or a supporting tool for providing support during assembly of electrical bushing 200, 300.

Electrical bushing 200, 300 includes inner tube 203, conductor 204 and outer insulator 205. The inner tube 203, conductor 204 and/or outer insulator 205 may have a substantially rotationally symmetrical form about a longitudinal axis extending in the axial direction A. Outer insulator 205 and insulation core 206 serve to electrically insulate conductor 204 and inner tube 203 from ground potential. Electrical isolation of conductor 204 and/or inner tube 203 may be provided by, for example, including a non-conductive or dielectric material. Insulation core 206 of electrical bushing 200, 300 may include a dielectric oil, or a solid insulation material and one or more layers of conductive material, for example aluminium foil, in order to modify the gradient of the electric field. Outer insulator 205 may include a silicon rubber (SiR) insulator. The SiR insulator may be molded directly to inner tube 203 and to the outer surface of the insulation core 206.

Electrical bushing 200, 300 includes a terminal adapter 210, 310 according to the embodiments described herein. As exemplarily shown in Figs. 2 and 4, the terminal adapter 210, 310 may correspond to an upper terminal adapter. The terminal adapter 210, 310 is assembled and fastened to a respective axial end of inner tube 203. The terminal adapter 210, 310 is configured to axially support the inner terminal 202 such that the terminal adapter 210, 310 electrically and mechanically connects inner terminal 202 with inner tube 203. The terminal adapter 210, 310 is further configured to receive a respective outer terminal 201.

Electrical bushing 100 may include an outer terminal. As exemplarily shown in Figs. 2 and 4, electrical bushing 200, 300 includes outer terminal 201, which may correspond to an upper outer terminal. The outer terminal may be configured for mounting at least one outer conductor thereto. For example, the outer terminal 201 may include a threaded portion configured for receiving at least one fastener for securely mounting at least one outer conductor thereto. The outer terminal is electrically connected to respective end of conductor 204 passing through electrical bushing 200, 300. The outer terminal is mechanically attached to electrical bushing 200, 300 using the terminal adapter 210, 310 according to embodiments of the present disclosure.

Due to the reduced axial load on inner tube 203, an electrical bushing 200, 300 having a terminal adapter 210, 310 according to embodiments of the present disclosure can include an inner tube 203 having a thin wall. The terminal adapter 210, 310 is configured to withstand the axial load between the outer terminal and the respective inner terminal, so that electrical resistance therebetween is minimized. A thin-walled inner tube 203 has lower mass and lower material cost, thereby reducing manufacturing and installation costs of the electrical bushing 200, 300 without compromising electrical performance of the electrical bushing 200, 300. Additionally, the thin-walled inner tube 203 can accommodate a conductor 104 of larger diameter, thus providing a larger current rating of the bushing.

Electrical bushing 200, 300 may be used in medium- or high-voltage applications. In the context of the present disclosure, the term "medium-voltage" may refer to a voltage of at least 1 kV and up to 52 kV. Further, the term "high-voltage" in the context of the present disclosure may refer to a voltage of at least 52 kV.

According to a further aspect of the present disclosure, a medium- or high-voltage electrical device is provided. The electrical device includes at least one electrical bushing 200, 300 according to any embodiments described herein. Particularly, the electrical device may be a medium- or high-voltage electrical transformer.

However, the use of electrical bushing 200, 300 according to embodiments of the present disclosure is not limited only to an electrical transformer. The electrical bushing 200, 300 of the present disclosure may be used in any application where conductors are to be insulated when passing through a grounded barrier. For example, the electrical bushing 200, 300 of the present disclosure may be used in any medium- or high-voltage electrical distribution components including, but not limited to, reactors, electrical breakers and switches, gas-insulated switchgear, etc.

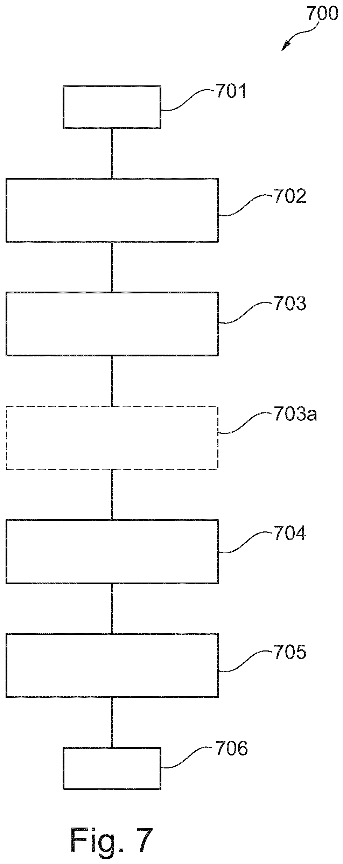

According to a further aspect of the present disclosure, a method for mounting a terminal adapter according to any of the embodiments described herein to an electrical bushing is provided. An example of the method is schematically shown in Fig. 7. Method 700 commences at block 701. The method 700 comprises clamping the terminal adapter to the inner tube of the electrical bushing at block 702, assembling the inner terminal to the terminal adapter at block 703, assembling the outer terminal to the terminal adapter at block 704, and fastening the outer terminal to the terminal adapter using the outer terminal fastener at block 705, such that the outer terminal applies an axial load to the inner terminal. Method 700 concludes at block 706.

Clamping the terminal adapter to the inner tube of the electrical bushing 702 may involve assembling the terminal adapter to the inner tube, and subsequently fastening the terminal adapter to the inner tube. The terminal adapter may include at least one clamping means, whereby the terminal adapter is fastened to the inner tube such that the terminal adapter applies a clamping force to the inner tube.

The terminal adapter according to the first embodiment of the present disclosure includes a single-piece terminal adapter. Particularly, in the first embodiment, the clamping means may be integrally formed into the terminal adapter. Clamping the terminal adapter according to the first embodiment may include assembling the terminal adapter to the inner tube by inserting the inner tube into the terminal adapter, such that the first radial surface of the terminal adapter faces and/or makes contact with the second radial surface of the inner tube. After the terminal adapter is assembled to the inner tube, clamping the terminal adapter according to the first embodiment may further include fastening the terminal adapter to the inner tube. At least one clamping means is used such that the terminal adapter applies a clamping force to the inner tube. Particularly, the clamping means applies a radial load between the first radial surface of the terminal adapter and the second radial surface of the inner tube such that the terminal adapter and inner tube are clamped together.

The terminal adapter according to the second embodiments of the present disclosure includes a multi-piece terminal adapter. Particularly, the terminal adapter of the second embodiment includes a lower component and an upper component. Clamping the terminal adapter according to the second embodiment may include assembling the upper component of the terminal adapter to the inner tube by inserting the inner tube into the upper component of the terminal adapter. After assembling the upper component, the lower component of the terminal adapter may be assembled to the inner tube and the upper component. The lower component is assembled such that the first radial surface of the lower component faces and/or makes contact with the second radial surface of the inner tube, and the third radial surface of the lower component faces and/or makes contact with the fourth radial surface of the upper component. After assembling the lower component, at least one clamping means is used such that the lower component of the terminal adapter applies a clamping force to the inner tube and to the upper component of the terminal adapter. Particularly, the clamping means applies a radial load between the first radial surface of the lower component and the second radial surface of the inner tube, as well as radial load between the third radial surface of the lower component and the fourth radial surface of the upper component, such that the upper component of the terminal adapter and inner tube are clamped together by the lower component.

Assembling the inner terminal to the terminal adapter 703 involves arranging the inner terminal such that inner terminal is axially supported within an axial end of the terminal adapter. Particularly, the inner terminal is arranged on the first axial surface of the terminal adapter. The inner terminal may include an axial surface facing in the axial direction which is configured to support the inner terminal in the axial direction. The axial surface of the inner terminal may be a surface of the inner terminal itself, or a surface of a locking ring configured for supporting the inner terminal. When arranging the inner terminal, the axial surface of the inner terminal contacts the first axial surface of the terminal adapter. A portion of the inner terminal may extend into the terminal adapter. Particularly, a portion of the inner terminal may extend through the terminal adapter and into the inner tube. Assembling the inner terminal may also include assembling the inner terminal to a conductor of the electrical bushing, for example by brazing the conductor to the inner terminal.

Assembling the outer terminal to the terminal adapter 704 involves arranging the outer terminal on the terminal adapter and the inner terminal such that an electrical surface of the outer terminal makes mechanical and electrical contact with an electrical surface of the inner terminal. The electrical surfaces of the outer and inner terminals, respectively, may face substantially in the axial direction. The outer terminal may be arranged on the terminal adapter and the inner terminal such that the outer terminal partially surrounds the terminal adapter and the inner terminal. The terminal adapter and/or the outer terminal may include a sealing means which provides a seal between the outer terminal and the terminal adapter. Thus, the outer terminal may be arranged on the terminal adapter such that the sealing means between the outer terminal and the terminal adapter forms a seal to prevent ingress and/or egress of liquids or gases.

Fastening the outer terminal to the terminal adapter 705 is performed using the outer terminal fastener. The fastening of the outer terminal causes the outer terminal to apply an axial load to the inner terminal. Particularly, the fastening of the outer terminal causes the electrical surfaces of the outer and inner terminal, respectively, to be clamped against each other, thereby reducing electrical resistance between the outer terminal and the inner terminal. The outer terminal fastener attaches the outer terminal to the terminal adapter, and may include any means for generating an axial load between the outer terminal and the inner terminal. For example, the outer terminal may be fastened to the terminal adapter using a number of threaded fasteners which are arranged to clamp the outer terminal in the axial direction, as exemplarily shown in Figs. 2 and 4. Thus, fastening the outer terminal to the terminal adapter 705 may include inserting at least one threaded fastener such that the at least one threaded fastener engages with a threaded portion of the terminal adapter, and tightening the at least one threaded fastener such that the outer terminal adapter applies an axial load to the inner terminal. However, the present disclosure is not limited thereto, and the outer terminal fastener may include any fastening means suitable for the outer terminal to apply an axial load to the inner terminal.

Optionally, method 700 may further include attaching a corona shield at block 703a. As exemplarily shown in Fig. 7, attaching a corona shield 703a may be performed after assembling the inner terminal to the terminal adapter 703, however the present disclosure is not limited thereto. For example, attaching a corona shield 703a may be performed at any point in method 700. Attaching a corona shield 703a may include arranging a corona shield on the terminal adapter and securing the corona shield using one or more corona shield fasteners. The arranging of the corona shield on the terminal adapter may be carried out such that the corona shield substantially encloses, surrounds or envelops the terminal adapter. The securing of the corona shield may include using at least one threaded screw or bolt, using a bayonet system, or using threaded features integrated into the corona shield and/or terminal adapter. By securing the corona shield to the terminal adapter, the corona shield is configured to be at substantially the same electrical potential as the terminal adapter.

While the foregoing is directed to aspects and embodiments of the disclosure, other and further embodiments of the disclosure may be devised without departing from the basic scope thereof, and the scope thereof is determined by the claims that follow.

## Claims

1. Terminal adapter (210, 310) for an electrical bushing (200, 300) having an inner tube (203) and an inner terminal (202), comprising:
a first radial surface (211, 321) configured for applying a radial clamping load to a second radial surface (208) of the inner tube (203);
a first axial surface (212, 331) configured for axially supporting the inner terminal (202); and
an outer terminal fastener (209) configured for applying an axial load between an outer terminal (201) and the inner terminal (202),
wherein the terminal adapter (201, 301) provides a load path from the first axial surface (212, 331) to the outer terminal fastener (209).

2. Terminal adapter (310) according to claim 1, further comprising a lower component (320) comprising the first radial surface (321) and an upper component (330) comprising the first axial surface (331) and the outer terminal fastener (209), wherein the lower component (320) is configured for securing the upper component (330) to the inner tube (203).

3. Terminal adapter (310) according to claim 2, wherein the lower component (320) comprises a third radial surface (322) and the upper component (330) comprises a fourth radial surface (332), wherein the third radial surface (322) is configured for applying a radial clamping load to the fourth radial surface (332).

4. Terminal adapter (210, 310) according to any one of claims 1 to 3, wherein the first radial surface (211, 321) and the second radial surface (208) each comprise at least one locking element configured for preventing relative rotation between the terminal adapter (210, 310) and the inner tube (203).

5. Terminal adapter (310) according to any one of claims 3 and 4, wherein the third radial surface (322) and the fourth radial surface (332) each comprise at least one locking element configured for preventing relative rotation between the lower component (320) and the upper component (330).

6. Terminal adapter (310) according to any one of claims 3 to 5, wherein the lower component (320) comprises a two-piece clamp.

7. Terminal adapter (210, 310) according to any one of claims 1 to 6, wherein the outer terminal fastener (209) comprises a plurality of threaded holes for accepting a plurality of threaded fasteners.

8. Terminal adapter (210, 310) according to any one of claims 1 to 7, further comprising an electrical contactor (240) between the terminal adapter (210, 310) and the inner tube (203).

9. Terminal adapter (210, 310) according to any one of claims 1 to 8, further comprising a corona shield (260) for electrically shielding the terminal adapter (210, 310).

10. Terminal adapter (210, 310) according to claim 9, wherein the corona shield (260) is detachable.

11. Terminal adapter (210, 310) according to any one of claims 1 to 10, wherein the electrical bushing (200, 300) further comprises an outer insulator (205) surrounding the inner tube (203), and wherein the terminal adapter (210, 310) further comprises a screening lip (270) surrounding an upper edge (205a) of the outer insulator (205).

12. Terminal adapter (210, 310) according to any one of claims 1 to 11, further comprising at least one sealing means (250) provided between the terminal adapter (210, 310) and at least one of the inner tube (203) and the outer terminal (201).

13. An electrical bushing (200, 300) having a terminal adapter (210, 310) according to any one of claims 1 to 12, wherein the electrical bushing (200, 300) is a medium- or high-voltage electrical bushing.

14. A medium- or high-voltage electrical device having an electrical bushing (200, 300) according to claim 13, in particular an electrical transformer.

15. Method for mounting a terminal adapter according to any one of claims 1 to 12 to an electrical bushing, the method comprising:
clamping the terminal adapter to the inner tube of the electrical bushing;
assembling the inner terminal to the terminal adapter;
assembling the outer terminal to the terminal adapter; and
fastening the outer terminal to the terminal adapter using the outer terminal fastener such that the outer terminal applies an axial load to the inner terminal.
